# EUROPEAN PATENT APPLICATION

(11) **EP 4 723 312 A1**
(43) Date of publication of application: **08.04.2026**
(21) Application number: 25200143.3
(22) Date of filing: 04.09.2025
(51) Int. Cl.: H01M 50/103, H01M 50/15, H01M 50/176, H01M 50/557, H01M 50/562

(54) **CONDUCTIVE STRUCTURE, COVER PLATE ASSEMBLY, AND BATTERY CELL**

(30) Priority: 06.09.2024 CN 202422195863 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

The present disclosure provides a conductive structure (10) for a battery cell, a cover plate assembly (100), and a battery cell (1000). The conductive structure (10) includes: a first-metal post (1) including a first end (11) and a second end (12) opposite to each other; and a second-metal layer (2) bonded to a surface of the first-metal post (1). The second-metal layer (2) wraps the first end (11) and extends toward the second end (12). The second-metal layer (2) is used to be connected to a tab (1210). In an axial direction of the first-metal post (1), a distance from an end portion (20) of the second-metal layer (2) to an end surface of the second end (12) is H1, a thickness D2 of the first-metal post (1), and a ratio of H1 to D2 ranges from 0 to 0.8.

## Description

### TECHNICAL FIELD

The present disclosure relates to the field of battery technologies, and in particular, to a conductive structure, a cover plate assembly, and a battery cell.

### BACKGROUND

Poles are important components for connecting inside and outside of cells (also called battery cells). Generally, one end of each pole is connected to a circuit outside the cell, e.g., connected to a module busbar, and another end of each pole is connected to an internal circuit of the cell, e.g., connected to a tab of an electrode assembly through a current collector. At present, most of the poles are made of single metal materials, e.g., a material of a positive pole is aluminum material, and a material of a negative pole is copper material. However, the poles made of the single metal materials are likely to bring problems of welding difficulties. Taking the negative pole being a pure copper pole as an example, when the pure copper pole and the terminal pressing block are welded by laser, in order to reduce costs and a weight of the cell, a material of the terminal pressing block is generally aluminum material. Since melting points of copper and aluminum are different, laser welding is easy to fail, resulting in cracking.

In order to reduce the welding difficulties, a composite pole is designed in the related art. The composite pole includes two metal layers arranged up and down and made of different materials. Different metal layers are bonded together by friction welding or stamping. Taking the composite pole being the negative pole as an example, the composite pole includes an aluminum layer and a copper layer. In a case where the composite pole includes two metal layers made of different materials stacked up and down, a path of current flowing on the composite pole is long, a resistance of the composite pole is too large, and the overcurrent capability is poor.

### SUMMARY

Embodiments of the present disclosure provide a conductive structure, a cover plate assembly, and a battery cell, so as to solve a technical problem of insufficient overcurrent capability of a composite pole.

In a first aspect, the embodiments of the present disclosure provide a conductive structure, including:

a first-metal post including a first end and a second end opposite to each other; and
a second-metal layer bonded to a surface of the first-metal post, where the second-metal layer wraps the first end and extends toward the second end, and the second-metal layer is configured to be connected to a tab. Along an axial direction of the first-metal post, a distance from an end portion of the second-metal layer to an end surface of the second end is H1, a thickness of the first-metal post is D2, and a ratio of H1 to D2 ranges from 0 to 0.8.

In an embodiment, a ratio of H1 to D2 ranges from 0.25 to 0.5.

In an embodiment, H1 ranges from 0 mm to 3.2 mm, and/or D2 ranges from 4 mm to 8 mm.

In an embodiment, a bonding area between the second-metal layer and the first-metal post is greater than or equal to 20 mm².

In an embodiment, the bonding area is greater than or equal to 80 mm².

In an embodiment, an average thickness of the second-metal layer is less than or equal to 3 mm.

In an embodiment, an average thickness of the second-metal layer ranges from 0.2 mm to 1.5 mm.

In an embodiment, a volume of the second-metal layer is less than a volume of the first-metal post, and a ratio of the volume of the second-metal layer to the volume of the first-metal post ranges from 0.1 to 0.65.

In an embodiment, on an appearance surface of the conductive structure, a ratio of a surface area of the second-metal layer to a surface area of the first-metal post is greater than or equal to 0.25.

In an embodiment, a diameter of the conductive structure is less than or equal to 10 mm, and a ratio of a surface area of the second-metal layer to a surface area of the first-metal post ranges from 0.25 to 0.6.

In an embodiment, a diameter of the conductive structure is greater than 10 mm and less than or equal to 30 mm, and a ratio of a surface area of the second-metal layer to a surface area of the first-metal post ranges from 0.75 to 2.

In an embodiment, the second-metal layer includes a first section and a second section, the first section corresponds to an end surface of the first end, and the second section corresponds to a side surface of the first end.

In an embodiment, the first-metal post is radially protruded to form a boss, and the second-metal layer extends at least onto the boss.

In an embodiment, the boss is located at the first end, and the second section covers at least a side surface of the boss and a surface of the boss on a side close to the second end.

In an embodiment, the conductive structure is a pole and a current collector integrally provided, the boss is the current collector, and the current collector is configured to be directly connected to the tab.

In an embodiment, the boss is away from the first end relative to the second end, a radial dimension of the boss is greater than a radial dimension of the first end. The second-metal layer further includes a third section, the third section corresponds to a surface of the boss on a side close to the first end. The second section is connected to the first section and the third section.

In an embodiment, the third section is formed as the end portion of the second-metal layer, and the third section is embedded in the boss.

In an embodiment, the boss is located at the second end. The boss is partially exposed outside the second-metal layer. The conductive structure is a pole and a terminal pressing block integrally provided. The boss is the terminal pressing block.

In an embodiment, the boss is located between the first end and the second end. The radial dimension of the boss is further greater than a radial dimension of the second end. The second-metal layer further includes a fourth section. The fourth section corresponds to a side surface of the boss. The fourth section is connected to the third section.

In an embodiment, the second-metal layer further includes a fifth section. The fifth section corresponds to a side surface of the boss away from the first end. The fourth section is connected to the fifth section and the third section.

In an embodiment, the end surface of the first end is partially recessed inward to form a groove. The first section includes a first sub-section, a second sub-section, and a third sub-section connected in sequence. The first sub-section is located outside the groove. The second sub-section is located on a side wall of the groove. The third sub-section is located on a bottom wall of the groove.

In an embodiment, the first-metal post is an aluminum post, and the second-metal layer is a copper layer; and/or a bonding interface between the second-metal layer and the first-metal post has an uneven microstructure; and/or a conductivity of a second metal in the second-metal layer is greater a conductivity of a first metal in the first-metal post.

In a second aspect, the embodiments of the present disclosure further provide a cover plate assembly, including:
a cover plate; and
the aforementioned conductive structure passing through the cover plate.

In an embodiment, the conductive structure is a pole. The cover plate assembly further includes a current collector. The current collector is located on one side of the cover plate and directly connected to the conductive structure.

In an embodiment, the conductive structure is a pole and a terminal pressing block integrally provided.

The cover plate assembly further includes a current collector. The current collector is located on one side of the cover plate and directly connected to the conductive structure. The terminal pressing block presses against another side of the cover plate.

In an embodiment, the cover plate includes:
a cover plate body,
a first insulating member disposed between the conductive structure and the cover plate body;
a second insulating member disposed between the cover plate body and the current collector; and/or
a sealing member disposed between the cover plate and the conductive structure.

According to a third aspect, the embodiments of the present disclosure further provide a battery cell, including:
a casing including an accommodating cavity;
an electrode assembly disposed in the accommodating cavity, where the electrode assembly includes a tab; and
the aforementioned cover plate assembly, where the cover plate assembly is connected to the casing and closes an opening of the accommodating cavity, and the conductive structure is connected to the tab.

Beneficial effects of the embodiments of the present disclosure are as follows.

The conductive structure provided by the embodiments of the present disclosure includes the first-metal post and the second-metal layer. The second-metal layer is bonded to the surface of the first-metal post, and the second-metal layer is provided to extend from the surface of the first end to the second end of the first-metal post, so that not only the bonding area between the second-metal layer and the first-metal post may be effectively increased, but also a distance between the end portion of the second-metal layer and the second end of the first-metal post is shortened, thereby shortening a current flow path. The first-metal post and the second-metal layer act together to improve the overcurrent capability of the conductive structure.

### BRIEF DESCRIPTION OF THE DRAWINGS

In order to provide clearer explanations of the technical solutions in the embodiments of the present disclosure, it is to be noted that the accompanying drawings in the following description of the embodiments are merely some of embodiments of the present disclosure, and that other accompanying drawings may be obtained by the skilled person in the art without involving creative labor.
FIG. 1 is a schematic view of a front viewing structure of a first conductive structure according to the embodiments of the present disclosure.
FIG. 2 is a schematic cross-sectional view of a structure of the conductive structure in FIG. 1.
FIG. 3 is a schematic view of a front viewing structure of a second conductive structure according to the embodiments of the present disclosure.
FIG. 4 is a schematic cross-sectional view of a structure of the conductive structure in FIG. 3.
FIG. 5 is a schematic three-dimensional view of a structure of a third conductive structure according to the embodiments of the present disclosure.
FIG. 6 is a schematic cross-sectional view of a structure of the conductive structure in FIG. 5.
FIG. 7 is a schematic cross-sectional view of a structure of a fourth conductive structure according to the embodiments of the present disclosure.
FIG. 8 is a schematic cross-sectional view of a structure of a fifth conductive structure according to the embodiments of the present disclosure.
FIG. 9 is a schematic exploded view of a structure of a cover plate assembly according to the embodiments of the present disclosure.
FIG. 10 is a schematic cross-sectional view of a structure of a battery cell according to the embodiments of the present disclosure.
FIG. 11 is a schematic cross-sectional view of a structure of a pole according to Embodiment 1 of the present disclosure.

Reference numerals are as follows:
10, conductive structure; 101, pole; 102, terminal pressing block;
1, first-metal post;
11, first end; 11b, groove;
12, second end;
13, boss;
2, second-metal layer;
20, end portion;
21, first section; 211, first sub-section; 212, second sub-section; 213, third sub-section;
22, second section;
23, third section;
24, fourth section;
25, fifth section;
100, cover plate assembly;
110, cover plate; 111, cover plate body; 112, first insulating member; 113, second insulating member; 114, mounting hole; 115, liquid injection hole;
120, current collector;
130, sealing member;
140, explosion-proof valve;
1000, battery cell;
1100, casing; 1110, accommodating cavity;
1200, electrode assembly; 1210, tab.

### DETAILED DESCRIPTION

The technical solutions in the embodiments of the present disclosure will be described clearly and completely hereafter with reference to accompanying drawings of the embodiments of the present disclosure. Apparently, the described embodiments are only a part of but not all embodiments of the present disclosure. Based on the embodiments of the present disclosure, all other embodiments obtained by those skilled in the art without involving any creative labor are within the scope of the present disclosure.

Furthermore, it should be understood that the specific embodiments described herein are only for illustrating and explaining the present disclosure and are not intended to limit the present disclosure. In the application, unless otherwise specified, the directional words used such as "upper" and "lower" usually refer to the upper and lower position of the device in actual use or working state, specifically to the direction of the drawing in the drawings, while "inside" and "outside" are understood referring to the contour lines of the device.

The terms "first" and "second" are only used for descriptive purposes, and cannot be interpreted as indicating or implying the relative importance or implicitly indicating the quantity of indicated technical features. Thus, features defined by first and second may explicitly or implicitly include one or more of the features. In the description of this application, multiple means two or more, unless otherwise specifically defined.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections or communicate with each other; may also be direct connections or indirect connections via intervening structures; may also be inner communications of two elements or interaction relationships between two elements, may also be direct connections or indirect connections via intervening structures; may also be inner communications of two elements or interaction relationships between two elements. Those ordinary skilled in the art can understand the specific meanings of the above terms in the present disclosure according to specific situations.

The terms "include", "comprise", or any other variation thereof are intended to cover a non-exclusive inclusion, such that a process, method, article, or device that includes a list of elements includes not only those elements but also other elements not expressly listed, or elements inherent to such a process, method, article, or device. An element proceeded by "comprises a..." does not, without more constraints, preclude the existence of additional identical elements in the process, method, article, or device that comprises the element.

In the descriptions of the embodiments of the present disclosure, words such as "example" or "for example" are used to indicate examples, descriptions, or descriptions. Any embodiment or design scheme described as an "example" or "for example" in the embodiments of the present disclosure is not explained as being more preferred or having more advantages than another embodiment or design scheme. The use of words such as "example" or "e.g." is intended to present a relative concept in a clear manner.

For ease of understanding the solutions of the present disclosure, spline curves and arrows that are used as labels in the accompanying drawings are described herein: a component indicated by a spline curve without an arrow is a solid component, that is, a component with a solid structure; and a component indicated by a spline curve with an arrow is a phantom component, that is, a component without a solid structure.

In view of a problem of insufficient overcurrent capability of a composite pole, the embodiments of the present disclosure provide a conductive structure, a cover plate assembly, and a battery cell.

According to a first aspect, the embodiments of the present disclosure provide a conductive structure. The conductive structure is used to connect an internal circuit of a battery cell to a circuit (an external circuit for short) outside the battery cell, so that the battery cell is connected to the external circuit to realize that the external circuit supplies power to the battery cell (i.e., the battery cell is charged), or the battery cell supplies power to the external circuit (i.e., the battery cell is discharged). In detail, the conductive structure may be used to be assembled to a cover plate of the battery cell.

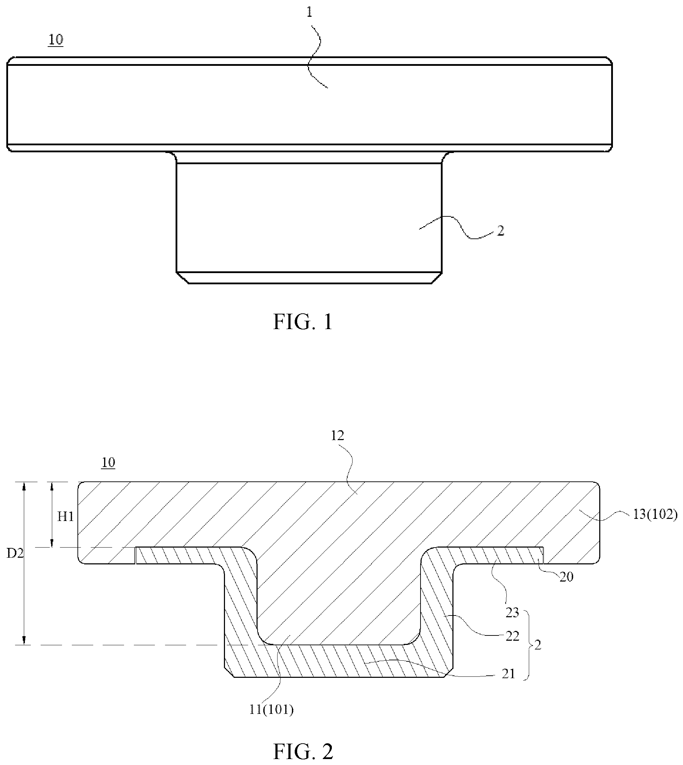

Specifically, referring to FIG. 1 to FIG. 9, the conductive structure 10 includes a first-metal post 1 and a second-metal layer 2. The second-metal layer 2 is bonded to a surface of the first-metal post 1. The first-metal post 1 includes two opposite ends, namely a first end 11 and a second end 12. The second-metal layer 2 wraps the first end 11 and extends toward the second end 12. The second-metal layer 2 is used to be connected to a tab. Along an axial direction of the first-metal post 1, a distance from an end portion 20 of the second-metal layer 2 to an end surface of the second end 12 is H1. A thickness of the first-metal post 1 is D2. A ratio of H1 to D2 ranges from 0 to 0.8.

The conductive structure 10 includes the first-metal post 1 and the second-metal layer 2. It may be understood that the first-metal post 1 is a pole structure, and a material of the first-metal post 1 includes a first metal. The second-metal layer 2 is a layered structure, and a material of the second-metal layer 2 includes a second metal. Herein, the second metal and the first metal are different metals. Optionally, a conductivity of the second metal is greater than a conductivity of the first metal, so that a current preferentially passes through the second-metal layer 2 and then flows to the first-metal post 1.

The second-metal layer 2 is bonded on the surface of the first-metal post 1, which means that the second-metal layer 2 is located on an outer surface of the first-metal post 1, and the second-metal layer 2 is further bonded to the first-metal post 1. The "bond" herein means that the second-metal layer 2 and the first-metal post 1 are not separated simply under the action of gravity. For example, the second-metal layer 2 and the first-metal post 1 are physically bonded together. As an example, the second-metal layer 2 and the first-metal post 1 may be bonded together by cold heading.

It may be understood that the second-metal layer 2 wraps a surface of the first end 11, and the second-metal layer 2 extends from the surface of the first end 11 to the second end 12. The second-metal layer 2 extends from the first end 11 to the second end 12. Specifically, the end portion 20 of the second-metal layer 2 extends to the second end 12. The end portion 20 of the second-metal layer 2 may extend to the second end 12, or the end portion 20 of the second-metal layer 2 may extend to a position between the first end 11 and the second end 12. Optionally, the end portion 20 of the second-metal layer 2 extends to the second end 12, but the second-metal layer 2 does not completely wrap the second end 12. That is, the second end 12 is at least partially exposed outside the second-metal layer 2 to facilitate direct connection of the second end 12 with other components. Herein, the end portion 20 of the second-metal layer 2 refers to a portion at an edge of the second-metal layer 2. That is, an end surface of the first end 11 of the first-metal post 1 and at least a part of a side surface of the first-metal post 1 are covered by the second-metal layer 2, so that a bonding area S between the second-metal layer 2 and the first-metal post 1 may be effectively increased to improve the overcurrent capability of the conductive structure 10.

The second-metal layer 2 is used to be connected to the tab. The second-metal layer 2 may be directly connected to the tab, or may be connected to the tab through other intermediate components (e.g., a current collector 120). As an example, the second-metal layer 2 is used for welding with the current collector 120, and the current collector 120 is welded with the tab. The tab herein refers to a metal conductor that leads positive and negative electrodes out from a battery cell (that is, a cell). As an example, the current collector 120 includes at least one of a current collecting plate and a connecting sheet.

In a case where the conductive structure 10 is applied to the battery cell, the first end 11 of the first-metal post 1 faces an inside of the battery cell, and the second end 12 faces an outside of the battery cell. The second-metal layer 2 wraps the first end 11 of the first-metal post 1 and extends from the first end 11 to the second end 12, so that the second-metal layer 2 may also serve as a protective layer to separate the first end 11 of the first-metal post 1 from an electrolyte in the battery cell, thereby reducing the risk of the first end 11 being corroded by the electrolyte.

It may be foreseen that the end portion 20 of the second-metal layer 2 extends toward the second end 12 of the first-metal post 1, and the distance between the end portion 20 of the second-metal layer 2 and the second end 12 of the first-metal post 1 is shortened. Referring to FIG. 2, along the axial direction of the first-metal post 1, the distance from the end portion 20 of the second-metal layer 2 to the end surface of the second end 12 is H1, and the thickness of the first-metal post 1 is D2, where the ratio of H1 to D2 ranges from 0 to 0.8. It may be understood that the end portion 20 of the second-metal layer 2 is closer to the second end 12 of the first-metal post 1, H1 is smaller, and the ratio of H1 to D2 is smaller. The end portion 20 of the second-metal layer 2 is farther from the second end 12 of the first-metal post 1, H1 is larger, and the ratio of H1 to D2 is larger. In the case where the conductive structure 10 is applied to the battery cell, the first end 11 of the first-metal post 1 faces the inside of the battery cell, the second end 12 faces the outside of the battery cell, and the second end 12 may be used to be connected to an external circuit. If the distance between the end portion 20 of the second-metal layer 2 and the second end 12 of the first-metal post 1 is shortened, the current may quickly flow to the second end 12 through the end portion 20 of the second-metal layer 2 and flow to the external circuit, so that a path of the current flowing on the conductive structure 10 is shortened, and the overcurrent capability of the conductive structure 10 is improved. As an example, the ratio of H1 to D2 is 0, 0.1, 0.2, 0.3, 0.4, 0.5, 0.6, 0.7, or 0.8.

The conductive structure 10 provided by the embodiments of the present disclosure includes the first-metal post 1 and the second-metal layer 2. The second-metal layer 2 is bonded to the surface of the first-metal post 1, and the second-metal layer 2 is provided to extend from the surface of the first end 11 to the second end 12 of the first-metal post, so that not only the bonding area S between the second-metal layer 2 and the first-metal post 1 may be effectively increased, but also the distance between the end portion 20 of the second-metal layer 2 and the second end 12 of the first-metal post 1 is shortened, thereby shortening a current flow path. The first-metal post 1 and the second-metal layer 2 act together to improve the overcurrent capability of the conductive structure 10.

In some embodiments, H1 ranges from 0 mm to 3.2 mm. In a case where the end portion 20 of the second-metal layer 2 extends to the end surface of the second end 12, H1 is the smallest and is equal to 0. It may be understood that the smaller H1 is, the smaller a surface area of the first-metal post 1 exposed outside the second-metal layer 2 is, and the smaller the distance between the end portion 20 of the second-metal layer 2 and the second end 12 of the first-metal post 1 is, which is more conducive to improving the overcurrent capability of the conductive structure 10. It should be noted that the end portion 20 of the second-metal layer 2 extending to the end surface of the second end 12 does not mean that the end surface of the second end 12 is completely covered by the second-metal layer 2. The end surface of the second end 12 may be partially exposed, which facilitates connection with the external circuit. As an example, H1 is 0 mm, 0.1 mm, 0.2 mm, 0.5 mm, 0.8 mm, 1.0 mm, 1.2 mm, 1.5 mm, 1.8 mm, 2.0 mm, 2.2 mm, 2.5 mm, 2.8 mm, 3.0 mm, or 3.2 mm.

In some embodiments, D2 ranges from 4 mm to 8 mm. The thickness D2 of the first-metal post 1 is controlled, which is conducive to controlling a volume and costs of the conductive structure 10. As an example, D2 is 4 mm, 5 mm, 6 mm, 7 mm, or 8 mm.

In some embodiments, the ratio of H1 to D2 ranges from 0.25 to 0.5. Within this range, the conductive structure 10 has a better overcurrent capability, and facilitates connection between the second end 12 of the first-metal post 1 and the external circuit. As an example, the ratio of H1 to D2 is 0.25, 0.3, 0.35, 0.4, 0.45, or 0.5.

In some embodiments, the bonding area between the second-metal layer 2 and the first-metal post 1 is greater than or equal to 20 mm². The second-metal layer 2 is bonded to the surface of the first-metal post 1. A surface of the second-metal layer 2 in contact with the first-metal post 1 is a bonding surface, also referred to as a contact surface. The bonding area S between the second-metal layer 2 and the first-metal post 1 refers to an area of the surface of the second-metal layer 2 in contact with the first-metal post 1. Typically, the bonding area S is greater than or equal to 20 mm². As an example, the bonding area S is 20 mm², 30mm², 40mm², 50mm², 100mm², 150mm², 200mm², 300mm², 400mm², or 500 mm². The bonding area S of the second-metal layer 2 and the first-metal post 1 is controlled to be greater than or equal to 20 mm², thereby ensuring the overcurrent capability of the conductive structure 10.

In addition, the bonding area S between the second-metal layer 2 and the first-metal post 1 is increased, which may further improve a bonding strength between the second-metal layer 2 and the first-metal post 1 and reduce the risk of the second-metal layer 2 falling off.

In some embodiments, the bonding area S between the second-metal layer 2 and the first-metal post 1 is greater than or equal to 80 mm². The bonding area S is increased, so that the overcurrent capability of the conductive structure 10 may be further improved, and the risk of the second-metal layer 2 falling off may be reduced. As an example, the bonding area S is 80 mm², 90mm², 100mm², 120mm², 130mm², 140mm², 150mm², 200mm², 250mm², 300mm², 400mm², or 500 mm².

In some embodiments, an average thickness D1 of the second-metal layer 2 is less than or equal to 3 mm. The second-metal layer 2 is made thinner, so that production costs of the conductive structure 10 may be effectively reduced. Especially when the first-metal post 1 is an aluminum post and the second-metal layer 2 is a copper layer, the use of more expensive copper is reduced, and the costs of the conductive structure 10 are effectively reduced while a weight of the conductive structure 10 is also reduced. As an example, the average thickness D1 of the second-metal layer 2 is 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm.

In some embodiments, the average thickness D1 of the second-metal layer 2 ranges from 0.2 mm to 1.5 mm. Generally, if the average thickness D1 of the second-metal layer 2 is reduced, the overcurrent capability of the conductive structure 10 is reduced, but the costs of the conductive structure 10 are reduced. The average thickness D1 of the second-metal layer 2 is designed to range from 0.2 mm to 1.5 mm, the conductive structure 10 may have both cost advantages and sufficient overcurrent capability within this range. As an example, the average thickness D1 of the second-metal layer 2 is 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

In some embodiments, a volume of the second-metal layer 2 is less than a volume of the first-metal post 1. It may be understood that in the conductive structure 10, a volume content of the second-metal layer 2 is less than a volume content of the first-metal post 1. The costs of the conductive structure 10 may be reduced by reducing the content of the second-metal layer 2 in the conductive structure 10.

In some embodiments, a ratio of the volume of the second-metal layer 2 to the volume of the first-metal post 1 ranges from 0.1 to 0.65. That is, the volume of the first-metal post 1 is 1.54 to 10 times the volume of the second-metal layer 2. That is, in the conductive structure 10, the volume content of the first-metal post 1 is much greater than the volume content of the second-metal layer 2. In a case where the bonding area S between the second-metal layer 2 and the first-metal post 1 is increased, it is ensured that the conductive structure 10 still has sufficient overcurrent capability, and the costs of the conductive structure 10 may be reduced by reducing the content of the second-metal layer 2 in the conductive structure 10, especially in the case where the first-metal post 1 is an aluminum pole and the second-metal layer 2 is a copper layer. As an example, the ratio of the volume of the second-metal layer 2 to the volume of the first-metal post 1 is 0.1, 0.2, 0.3, 0.4, 0.5, 0.6, or 0.65. Generally, the ratio of the volume of second-metal layer 2 to the volume of the first-metal post 1 fluctuates with a size (for example, a diameter) of the conductive structure 10. The larger the size of the conductive structure 10, the smaller the ratio of the volume of the second-metal layer 2 to the volume of the first-metal post 1.

In some embodiments, referring to FIG. 2, on an appearance surface of the conductive structure 10, a ratio A of a surface area of the second-metal layer 2 to a surface area of the first-metal post 1 is greater than or equal to 0.25. Since the second-metal layer 2 is bonded to the surface of the first-metal post 1, a surface of the second-metal layer 2 exposed outside is formed as the appearance surface of the conductive structure 10. In a case where the first-metal post 1 does not completely cover the second-metal layer 2, a surface of the first-metal post 1 exposed outside will also form the appearance surface of the conductive structure 10. It may be understood that on the appearance surface of the conductive structure 10, the surface area of the second-metal layer 2 is an area of the surface of the second-metal layer 2 exposed outside, and the surface area of the first-metal post 1 is an area of the surface of the first-metal post 1 exposed outside. The surface area of the second-metal layer 2 on the appearance surface of the conductive structure 10 is increased, which is equivalent to increasing an area of the second-metal layer 2 covering on the first-metal post 1. That is, the bonding area S between the second-metal layer 2 and the first-metal post 1 is increased, thereby improving the overcurrent capability of the conductive structure 10. As an example, on the appearance surface of the conductive structure 10, the ratio A of the surface area of the second-metal layer 2 to the surface area of the first-metal post 1 is 0.25, 0.5, 0.75, 1, 1.5, 2, 2.5, or 3.

In some embodiments, a diameter ϕ of the conductive structure 10 is less than or equal to 10 mm. The ratio A of the surface area of the second-metal layer 2 to the surface area of the first-metal post 1 ranges from 0.25 to 0.6. In order to facilitate the second end 12 to be directly connected to other components, the second end 12 is at least partially exposed outside the second-metal layer 2. Generally, the smaller the diameter of the conductive structure 10, the smaller a surface area of the conductive structure 10. In a case where φ is less than or equal to 10 mm, the ratio A is controlled to range from 0.25 to 0.6, so as to ensure that the second end 12 has a sufficient connection surface to connect with other components, and the bonding area S is large enough, thereby ensuring the overcurrent capability of the conductive structure 10. As an example, φ is 5 mm, 6 mm, 7 mm, 8 mm, 9 mm or 10 mm, and A is 0.25, 0.3, 0.4, 0.5, or 0.6.

In some embodiments, the diameter ϕ of the conductive structure 10 is greater than 10 mm and less than or equal to 30 mm. The ratio of the surface area of the second-metal layer 2 to the surface area of the first-metal post 1 ranges from 0.75 to 2. The diameter of the conductive structure 10 is increased, so that the overcurrent capability of the conductive structure 10 is improved, but the costs of the conductive structure 10 are increased and the burden of volume and mass is brought. In a case where the diameter ϕ satisfies: 10mm<φ≤30mm, the conductive structure 10 may have both the cost advantage and a better overcurrent capability. In addition, the diameter of the conductive structure 10 is increased, the surface area of the conductive structure 10 is also increased, the remaining portion of the second end 12 is exposed outside the second-metal layer 2, and other areas may cover the second-metal layer 2 to increase the bonding area S. In the case where the diameter ϕ satisfies: 10mm<φ≤30mm, A is controlled to satisfy: 0.75≤A≤2, which may ensure that the bonding area S is large enough, thereby ensuring the overcurrent capability of the conductive structure 10. As an example, φ is 10.1 mm, 11 mm, 12 mm, 14 mm, 16 mm, 18 mm, 20 mm, 22 mm, 24 mm, 26 mm, 28 mm, or 30 mm, and A is 0.75, 0.8, 0.9, 1.0, 1.2, 1.5, 1.7, 1.85, or 2.

In some embodiments, the first metal is aluminum, i.e., the first-metal post 1 is an aluminum post. The second metal is copper, i.e., the second-metal layer 2 is a copper layer. Aluminum is cheaper than copper. The conductive structure 10 is provided as a structure including the aluminum pole and the copper layer, so that the costs of the conductive structure 10 may be effectively reduced. Exemplarily, the conductive structure 10 is a negative pole.

In some embodiments, the bonding interface between the second-metal layer 2 and the first-metal post 1 has an uneven microstructure. Herein it refers to the concave-convex fit between the surface of the second-metal layer 2 and the surface of the first-metal post 1 at a microscopic level. Optionally, the conductive structure 10 is a cold heading molded member. As an example, the first-metal post 1 is the aluminum pole, the second-metal layer 2 is the copper layer, and the conductive structure 10 is formed from a copper-aluminum composite plate by cold heading machining. Since metals have ductility, during the cold heading process, under the action of pressure, the first metal in the first-metal post 1 and the second metal in the second-metal layer 2 deform and invade each other, so that the bonding interface between the first-metal post 1 and the second-metal layer 2 is formed into a uneven wavy surface at the microscopic level, thereby increasing the bonding area between the first-metal post 1 and the second-metal layer 2.

In some embodiments, referring to FIGs. 2 and 6 to 8, the second-metal layer 2 includes a first section 21 and a second section 22. The first section 21 corresponds to the end surface of the first end 11. The second section 22 corresponds to a side surface of the first end 11. Herein, the first section 21 and the second section 22 refer to two different portions of the second-metal layer 2. It may be understood that the end surface of the first end 11 of the first-metal post 1 is covered by the first section 21 and at least a part of the side surface of the first-metal post 1 is covered by the second section 22, so that the bonding area S between the second-metal layer 2 and the first-metal post 1 may be effectively increased, and the distance between the end portion of the second-metal layer 2 and the second end 12 of the first-metal post 1 may be shortened, thereby improving the overcurrent capability of the conductive structure 10. In addition, the second-metal layer 2 is provided to include at least two sections. The first section 21 and the second section 22 may wrap the first end 11 to protect the first end 11, thereby reducing the risk of the first end 11 being corroded by the electrolyte. Herein, the end portion 20 of the second-metal layer 2 may or may not be located in the second section 22. In a case where the end portion 20 of the second-metal layer 2 is not located in the second section 22, it means that the second-metal layer 2 further includes other sections, i.e., other portions. Optionally, the number of sections of the second-metal layer 2 is less than or equal to five, because the more sections there are, the greater the manufacturing difficulty, and the higher the costs.

In some embodiments, referring to FIGs. 1 to 8, the first-metal post 1 is radially protruded to form a boss 13, and the second-metal layer 2 extends at least onto the boss 13. Specifically, a part of the first-metal post 1 protrudes outward substantially along a radial direction of the first-metal post 1 to form the boss 13. As an example, an angular deviation between the boss 13 and the radial direction of the first-metal post 1 is within ±15°. The second-metal layer 2 at least extends onto the boss 13. The end portion 20 of the second-metal layer 2 may extend onto the boss 13, or the end portion 20 of the second-metal layer 2 may extend beyond the boss 13. That is, the boss 13 may be completely wrapped in the second-metal layer 2, or may be partially wrapped in the second-metal layer 2. In the case where the end portion 20 of the second-metal layer 2 extends onto the boss 13, the end portion 20 of the second-metal layer 2 may be embedded in the boss 13, or may be located only on a surface of the boss 13. The first-metal post 1 is radially protrudes to form the boss 13, so that an area of the outer surface of the first-metal post 1 may be increased by using the boss 13. Furthermore, the second-metal layer 2 further partially or even completely covers the boss 13, so that the bonding area between the second-metal layer 2 and the first-metal post 1 is increased, and the overcurrent capability of the conductive structure 10 is improved.

In addition, in the case where the conductive structure 10 is applied to the battery cell, the boss 13 may be used as a stop structure to be in stop and fit with other components (e.g., a cover plate 110). Meanwhile, since the second-metal layer 2 at least extends onto the boss 13, the second-metal layer 2 will be clamped between the boss 13 and the components in stop fit with the boss 13, thereby preventing the risk that the second-metal layer 2 is separated from the first-metal post 1.

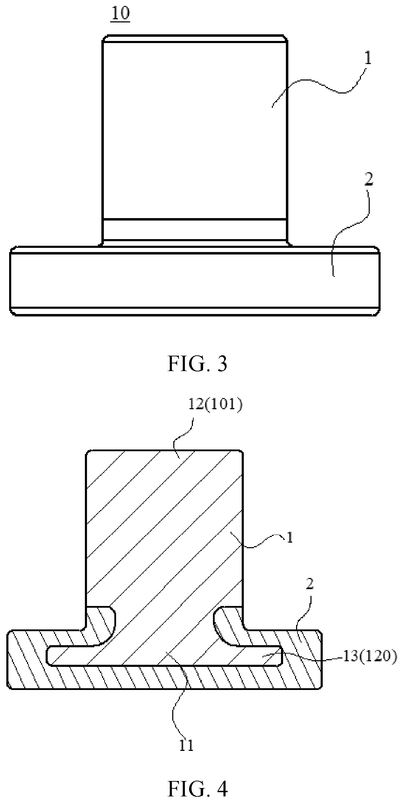

In some embodiments, referring to FIGs. 3 and 4, the boss 13 is located at the first end 11. The second section 22 at least covers a side surface of the boss 13 and a surface of the boss 13 on a side close to the second end 12, i.e., the boss 13 is completely covered in the second-metal layer 2. As an example, referring to FIG. 3, a shape of the conductive structure 10 is roughly in an inverted T-shape. When the conductive structure 10 is assembled on the cover plate 110, a smaller end of the conductive structure 10 may pass through the mounting hole 114 on the cover plate 110 from bottom to top until the boss 13 abuts against the cover plate 110, and the second-metal layer 2 on an upper surface of the boss 13 is clamped between the boss 13 and the cover plate 110 to prevent the second-metal layer 2 from falling off.

In some embodiments, referring to FIG. 3 and FIG. 4, the conductive structure 10 is an integrated structure of pole-current collector, i.e., the conductive structure 10 is the pole 101 and the current collector 120 integrally provided. The boss 13 is the current collector 120. The current collector 120 is used to be directly connected to the tab. The pole 101 and the current collector 120 are integrally provided, so that a process of assembling the pole 101 and the current collector 120 may be omitted, and the production costs of the battery cell are reduced. In addition, since the second-metal layer 2 extends onto the boss 13, i.e., the second-metal layer 2 extends onto the current collector 120, a volume of the pole 101 does not need to be increased, and the bonding area of the second-metal layer 2 may be greatly increased only by reusing the current collector 120, thereby improving the overcurrent capability of the conductive structure 10, reducing the risk of the second-metal layer 2 falling off, and not bringing the burden of volume and weight. The above-mentioned current collector 120 is also a component in the battery cell, and the current collector 120 is generally located inside the battery cell. That is, when the integrated structure of pole-current collector is assembled on the battery cell, e.g., the cover plate 110 of the battery cell, the boss 13 is located inside the battery cell. The current collector 120 is further used to be electrically connected to the tab of the electrode assembly.

In some embodiments, referring to FIGs. 1, 2, and 5 to 8, the boss 13 is away from the first end 11 relative to the second end 12, and a radial dimension of the boss 13 is greater than a radial dimension of the first end 11. The boss 13 may be located at the second end 12, or may be located between the first end 11 and the second end 12. As an example, referring to FIG. 1, when the boss 13 is located at the second end 12, the shape of the conductive structure 10 is roughly in an upright T-shape. When the conductive structure 10 is assembled on the cover plate 110, the smaller end of the conductive structure 10 may pass through a mounting hole on the cover plate 110 from top to bottom until the boss 13 abuts against the cover plate 110, and the second-metal layer 2 on a lower surface of the boss 13 is clamped between the boss 13 and the cover plate 110 to prevent the second-metal layer 2 from falling off.

Optionally, referring to FIGs. 2 and 6 to 8, the second-metal layer 2 further includes a third section 23. The third section 23 corresponds to a surface of the boss 13 on a side close to the first end 11. The second section 22 is connected to the first section 21 and the third section 23. Herein, the third section 23 refers to a portion of the second-metal layer 2 different from the second section 22 of the first section 21. Herein, the end portion 20 of the second-metal layer 2 may or may not be located in the third section 23. When the end portion 20 of the second-metal layer 2 is not located in the third section 23, it means that the second-metal layer 2 further includes other sections, i.e., other portions.

The second-metal layer 2 further includes the third section 23, and the third section 23 extends to the surface of the boss 13, so that the bonding area between the second-metal layer 2 and the first-metal post 1 may be further increased, the overcurrent capability of the conductive structure 10 may be improved, and the risk of the second-metal layer 2 falling off may be reduced.

In some embodiments, referring to FIG. 2, the third section 23 is formed as the end portion 20 of the second-metal layer 2, and the third section 23 is embedded in the boss 13. The second-metal layer 2 is provided to include only three sections, so that the difficulty of manufacturing the conductive structure 10 may be reduced. Meanwhile, the third section 23 serving as the end portion 20 of the second-metal layer 2 is also embedded in the boss 13, so that the bonding area between the second-metal layer 2 and the first-metal post 1 is increased, and the overcurrent capability of the conductive structure 10 and the bonding strength between the second-metal layer 2 and the first-metal post 1 are improved, thus the conductive structure 10 has a high cost performance.

In some embodiments, referring to FIGs. 1-2 and 5-6, the boss 13 is located at the second end 12, and the boss 13 is partially exposed outside the second-metal layer 2. The boss 13 is located at the second end 12. When the conductive structure 10 is assembled with the cover plate 110, the boss 13 is generally located an outer side of the cover plate 110. The boss 13 is provided to be partially exposed outside the second-metal layer 2, which facilitates the boss 13 to be directly connected with other components (such as a module busbar).

Optionally, referring to FIG. 2, the conductive structure 10 is an integrated structure of pole-terminal pressing block. That is, the conductive structure 10 is the pole 101 and the terminal pressing block 102 integrally provided. The boss 13 is a terminal pressing block 102. The pole 101 and the terminal pressing block 102 are integrally provided, a process of assembling the pole 101 and the terminal pressing block 102 may be omitted, and the costs of manufacturing the battery cell are reduced. In addition, since the second-metal layer 2 extends onto the boss 13, i.e., the second-metal layer 2 extends onto the terminal pressing block 102, the volume of the pole 101 does not need to be increased, and the bonding area of the second-metal layer 2 may be greatly increased only by reusing the terminal pressing block 102, thereby improving the overcurrent capability of the conductive structure 10, reducing the risk of the second-metal layer 2 falling off, and not bringing the burden of volume and weight. When the integrated structure of pole-terminal pressing block is assembled on the battery cell, e.g., on the cover plate 110 of the battery cell, the boss 13 serving as the terminal pressing block 102 is located outside the battery cell, e.g., pressed against the cover plate 110, thereby realizing fixation.

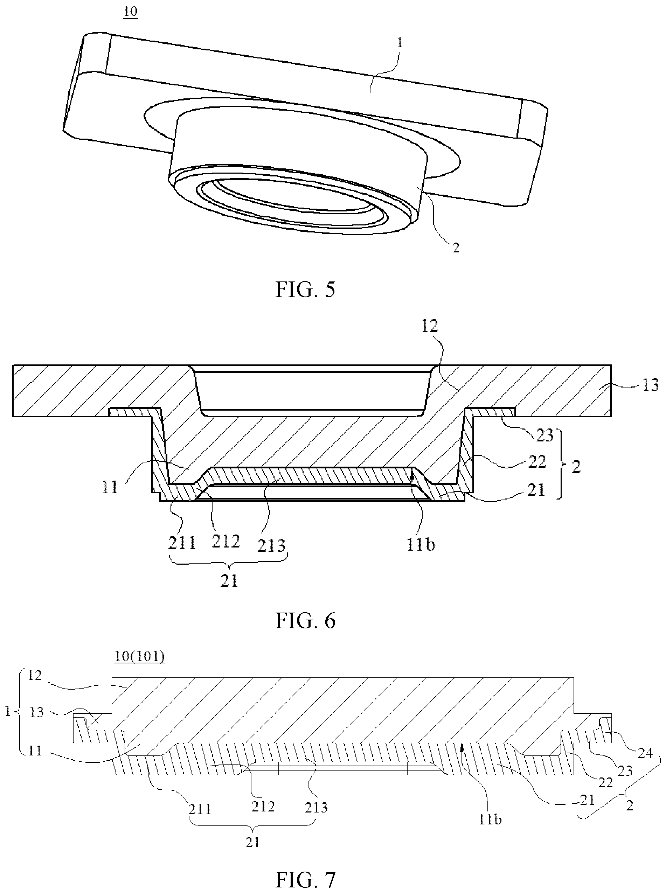

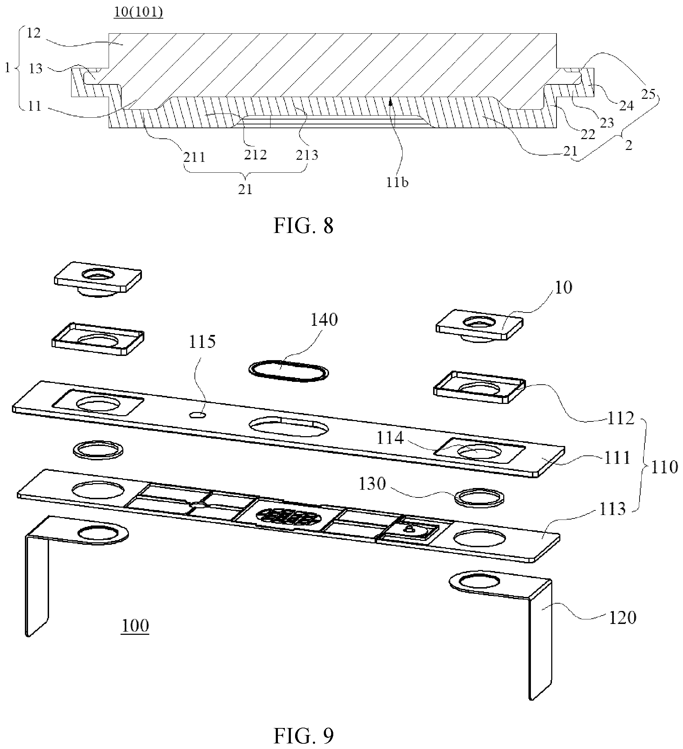

In some embodiments, referring to FIGs. 7 to 8, the boss 13 is located between the first end 11 and the second end 12, and the radial dimension of the boss 13 is further greater than a radial dimension of the second end 12. As an example, referring to FIGs. 7 and 8, in a case where the boss 13 is located between the first end 11 and the second end 12, the radial dimension (e.g., a diameter) of the boss 13 is greater than the radial dimension of the first end 11, and is also greater than the radial dimension of the second end 12. A shape of the conductive structure 10 is roughly in "Chinese character ' 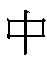 '-shaped". For such a shaped conductive structure 10, when the boss 13 is used as a stop structure, the boss 13 may be clamped from both sides of the boss 13 to achieve a more stable fixation of the second-metal layer 2. Generally, in order to prevent the conductive structure 10 from being excessively high, optionally, the boss 13 is made thin, and the second end 12 is used to be electrically connected to another component.

Optionally, referring to FIG. 7, the second-metal layer 2 further includes a fourth section 24. The fourth section 24 corresponds to the side surface of the boss 13. The fourth section 24 is connected to the third section 23. The arrangement of the fourth section 24 may further increase the bonding area between the second-metal layer 2 and the first-metal post 1. Herein, the side surface of the boss 13 may be completely covered by the fourth section 24, or may be partially covered by the fourth section 24.

Optionally, referring to FIG. 8, the second-metal layer 2 further includes a fifth section 25. The fifth section 25 corresponds to a surface of the boss 13 on a side away from the first end 11. The fourth section 24 is connected to the fifth section 25 and the third section 23. The arrangement of the fifth section 25 may further increase the bonding area between the second-metal layer 2 and the first-metal post 1. Optionally, the end portion 20 of the second-metal layer 2 is located in the fifth section 25.

In some embodiments, referring to FIGs. 6 to 8, the end surface of the first end 11 is partially recessed to form a groove 11b. The first section 21 includes a first sub-section 211, a second sub-section 212, and a third sub-section 213 connected in sequence. The first sub-section 211 is located outside the groove 11b. The second sub-section 212 is located on a side wall of the groove 11b. The third sub-section 213 is located on a bottom wall of the groove 11b. The "recessed inward" herein means that the end surface of the first end 11 is recessed toward inside the first-metal post 1. The end surface of the first end 11 is formed with the groove 11b. The second-metal layer 2 also matches the surface of the first end 11 to form the second sub-section 212 and the third sub-section 213 attached to a surface of an inner wall of the groove 11b. The groove 11b is disposed on the end surface of the first end 11, and the second-metal layer 2 is attached to the surface of the inner wall of the groove 11b, so as to increase the bonding area between the second-metal layer 2 and the first-metal post 1 and improve the overcurrent capability of the conductive structure 10.

According to a second aspect, the embodiments of the present disclosure further provide a cover plate assembly. The cover plate assembly is configured to match with a casing of a battery cell to form an enclosed accommodating cavity. The accommodating cavity is configured to accommodate the electrode assembly of the battery cell.

Specifically, referring to FIG. 9, the cover plate assembly 100 includes a cover plate 110 and the aforementioned conductive structure 10. The conductive structure 10 is connected to the cover plate 110. Specifically, the conductive structure 10 passes through the cover plate 110.

In detail, along a thickness direction of the cover plate 110, the cover plate 110 includes a first surface and a second surface opposite to each other. Referring to FIG. 9, when the cover plate assembly 100 is mounted on the casing 1100 of the battery cell 1000, the first surface is a surface of the cover plate 110 on a side away from the casing 1100, and the second surface is a surface of the cover plate110 on a side close to the casing 1100. Along the thickness direction of the cover plate 110, a mounting hole 114 penetrating through the cover plate 110 is provided. The conductive structure 10 passes through the cover plate 110 through the mounting hole 114.

In some embodiments, referring to FIG. 9, the conductive structure 10 is a pole 101 and a terminal pressing block 102 integrally provided. The cover plate assembly 100 further includes a current collector 120. The current collector 120 is a conductive component in the battery cell 1000 for connecting to a tab 1210 of the electrode assembly 1200. The current collector 120 is located on one side of the cover plate 110, specifically, a side of the cover plate 110 away from the terminal pressing block 102. That is, the current collector 120 is located on the second surface of the cover plate 110, and the terminal pressing block 102 presses against the other side of the cover plate 110, i.e., the first surface of the cover plate 110. The current collector 120 is directly connected to the conductive structure 10, for example, welded. Specifically, the current collector 120 is welded to the second-metal layer 2 in the conductive structure 10. Optionally, a material of the current collector 120 is the same as a material of the second-metal layer 2, i.e., the material of the current collector 120 is the second metal, which can reduce the difficulty of welding the current collector 120 with the second-metal layer 2 and improve the reliability of welding.

In some embodiments, referring to FIG. 9, the conductive structure 10 is the pole 101. The cover plate assembly 100 further includes the current collector 120. The current collector 120 is located on one side of the cover plate 110, for example, the current collector 120 is located on the second surface of the cover plate 110. The current collector 120 is directly connected to the conductive structure 10, for example, welded.

In some embodiments, the current collector 120 includes at least one of a current collecting plate and a connecting sheet.

In some embodiments, the current collector 120 includes a current collector body (not shown in the figures) and the connecting sheet (not shown in the figures). The current collector body is connected to the connecting sheet. The current collector body is used to be connected to the tab 1210 of the electrode assembly. The connecting sheet is welded to the second-metal layer.

In some embodiments, referring to FIG. 9, the cover plate 110 includes a cover plate body 111, a first insulating member 112, and a second insulating member 113. The first insulating member 112 and the second insulating member 113 are arranged on two opposite sides of the cover plate body 111, respectively. The first insulating member 112 is disposed between the conductive structure 10 and the cover plate body 111, and the second insulating member 113 is disposed between the cover plate body 111 and the current collector 120. Optionally, in a case where the first-metal post 1 in the conductive structure 10 has the boss 13, the first insulating member 112 is disposed between the boss 13 and the cover plate body 111. The cover plate 110 is provided with the mounting hole 114. The mounting hole 114 penetrates through the cover plate body 111, the first insulating member 112, and the second insulating member 113. As an example, the cover plate body 111 is a smooth aluminum sheet. The first insulating member 112 and the second insulating member 113 are both plastic members.

In some embodiments, referring to FIG. 9, the cover plate assembly 100 further includes a sealing member 130. The sealing member 130 is disposed between the cover plate 110 and the conductive structure 10 to seal a gap between the conductive structure 10 and the mounting hole, thereby preventing the electrolyte from leaking from the gap. As an example, the sealing member 130 is located between the cover plate body 111 and the second insulating member 113.

In some embodiments, processes of assembling the cover plate assembly 100 include following steps: aligning and stacking the second insulating member 113, the sealing member 130, the cover plate body 111, and the first insulating member 112 in sequence from bottom to top, passing the conductive structure 10 through the mounting hole 114 from top to bottom, abutting a larger end (e.g., the boss 13) on the conductive structure 10 against the first insulating member 112, mounting the current collector 120 on a side of the second insulating member 113 away from the sealing member 130, and welding the current collector 120 with the conductive structure 10, e.g., the second-metal layer 2 of the conductive structure 10, together by laser welding.

In some embodiments, referring to FIG. 9, the cover plate assembly 100 further includes an explosion-proof valve 140. The explosion-proof valve 140 is disposed on the cover plate 110.

In some embodiments, referring to FIG. 9, the cover plate 110 is further provided with a liquid injection hole 115 and a sealing structure (not shown in the figures) for sealing the liquid injection hole.

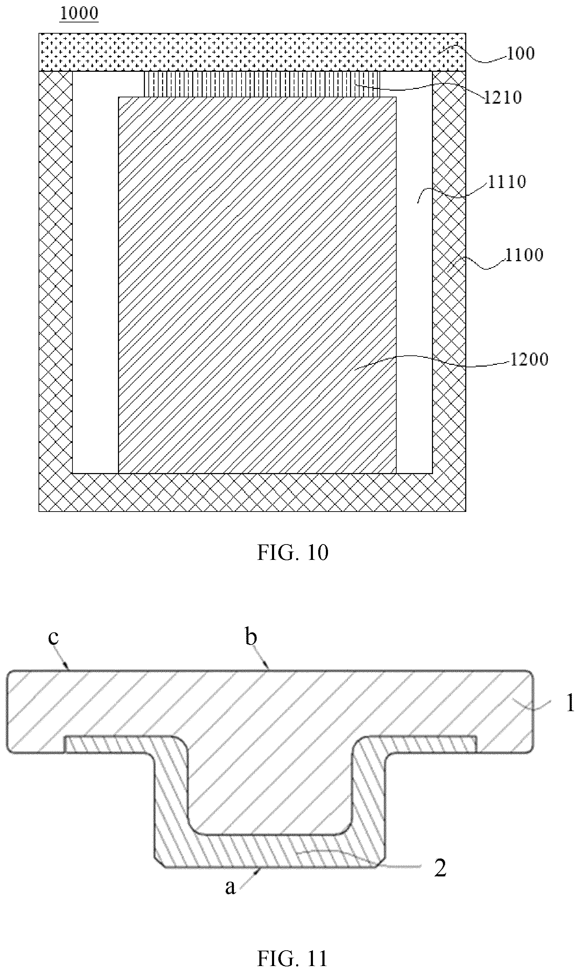

According to a third aspect, referring to FIG. 10, the embodiments of the present disclosure further provide a battery cell 1000. The battery cell 1000 is also referred to as a cell. The battery cell 1000 is a basic unit for implementing conversion between chemical energy and electrical energy.

Specifically, the battery cell 1000 includes a casing 1100, an electrode assembly 1200, and the aforementioned cover plate assembly 100. Specifically, the casing 1100 includes an accommodating cavity 1110. The electrode assembly 1200 is disposed in the accommodating cavity 1110. The cover plate assembly 100 is connected to the casing 1100 and closes an opening of the accommodating cavity 1110. The electrode assembly 1200 includes a tab 1210. The conductive structure 10 is connected to the tab 1210.

Specifically, the electrode assembly 1200 further includes electrode sheets and a separator. The tab 1210 is connected to the electrode sheets. The electrode sheets include a positive electrode sheet and a negative electrode sheet. The separator is located between the positive electrode sheet and the negative electrode sheet. It may be understood that the tab 1210 also includes a positive tab and a negative tab. The positive tab is connected to the positive electrode sheet. The negative tab is connected to the negative electrode sheet.

In addition, the battery cell 1000 further includes an electrolyte. The electrolyte is located in the accommodating cavity 1110. The electrode assembly 1200 is immersed in the electrolyte.

The following provides detailed descriptions with reference to specific embodiments.

### Embodiment 1

A pole is provided, and processes of manufacturing the pole are as follows:
S1, punching a copper-aluminum composite plate (a thickness of a copper layer accounts for 21% of an overall material thickness) into a cylindrical blank (with a diameter of 12.8 mm) according to a required dimension by a punching press;
S2, placing the cylindrical blank in a shaping fixture for shaping to improve the dimensional consistency of the blank, and removing a small amount of copper material attached to a top surface of an aluminum layer;
S3, placing the cylindrical blank in a screening tray, and screening a blank that meet requirements (that is, copper and aluminum surfaces face a same direction) and loading the blank into a first cold-heading mold;
S4, placing the blank in a first cold-heading mold for cold heading, so that the aluminum layer material is extruded toward the copper layer material to obtain a semi-finished product having a mushroom head shape;
S5, feeding the semi-finished product having the mushroom head shape into a second cold heading mold for cold heading again through a clamping jaw, and spreading the copper layer around by extruding the top aluminum layer;
S6, removing excess material on the semi-finished product to obtain a finished product, i.e., a pole.

FIG. 11 is a schematic cross-sectional view of a structure of a pole manufactured in Embodiment 1, where a first-metal post 1 is an aluminum post, and a second-metal layer 2 is a copper layer. Resistance values of different regions of the poles were tested, and specific test processes ware as follows: 10 poles were randomly selected from all the finished products manufactured in Embodiment 1 as samples for testing. Please continue to refer to FIG. 11, the test scheme 1 was the resistance value between the multimeter test point a (located at a top of the copper layer) and the point b (a center of an end surface of the aluminum post). The test scheme 2 was the resistance value between the multimeter test point a and the point c (an edge of the end surface of the aluminum post). The results obtained by the two test schemes were recorded in Table 1.

**Table 1**

| | Test Scheme 1 | Test Scheme 2 |
|---|---|---|
| Sample 1 | 0.016 mΩ | 0.011 mΩ |
| Sample 2 | 0.013 mΩ | 0.011 mΩ |
| Sample 3 | 0.015 mΩ | 0.013 mΩ |
| Sample 4 | 0.014 mΩ | 0.012 mΩ |
| Sample 5 | 0.011 mΩ | 0.010 mΩ |
| Sample 6 | 0.013 mΩ | 0.011 mΩ |
| Sample 7 | 0.014 mΩ | 0.010 mΩ |
| Sample 8 | 0.012 mΩ | 0.009 mΩ |
| Sample 9 | 0.011 mΩ | 0.008 mΩ |
| Sample 10 | 0.014 mΩ | 0.011 mΩ |

It may be seen from Table 1 that the resistance value test results of 10 samples are averaged to obtain that the average resistance value of the point a-point b is 0.0133 mΩ, the average resistance value of the point a-point c is 0.0106 mΩ, in the pole, the copper layer wraps the surface of one side of the aluminum column, because the conductivity of copper is better than that of aluminum, the current will preferentially flow through the copper layer, and the end portion of the copper layer is embedded in the aluminum column, the distance from the copper layer to the point b is greater than the distance from the copper layer to the point c, so the average resistance value of the point a-point b is greater than the average resistance value of the point a-point c. It may be seen that the end portion of the copper layer extending to the side surface of the aluminum column (specifically, the bottom surface of the boss) may shorten at least part of the current flow path and improve the overcurrent capability of the pole.

The embodiments of the present disclosure have been described in detail above, and the principles and embodiments of the present disclosure have been described herein by applying specific examples, and the description of the above embodiments is only for helping to understand the technical solutions of the present disclosure and the core ideas thereof. **In** addition, for those skilled in the art, there will be changes in the specific implementations and the scope of application based on the ideas of the present disclosure. **In** summary, the content of the description should not be understood as limiting the present disclosure.

## Claims

1. A conductive structure (10), **characterized in that** the conductive structure (10) comprises:
a first-metal post (1) comprising a first end (11) and a second end (12) opposite to each other; and
a second-metal layer (2) bonded to a surface of the first-metal post (1), wherein the second-metal layer (2) wraps the first end (11) and extends toward the second end (12), and the second-metal layer (2) is configured to be connected to a tab (1210);
wherein along an axial direction of the first-metal post (1), a distance from an end portion (20) of the second-metal layer (2) to an end surface of the second end (12) is H1, a thickness of the first-metal post (1) is D2, and a ratio of H1 to D2 ranges from 0 to 0.8.

2. The conductive structure (10) according to claim 1, **characterized in that** the ratio of H1 to D2 ranges from 0.25 to 0.5; or
wherein H1 ranges from 0 mm to 3.2 mm, and/or D2 ranges from 4 mm to 8 mm; or
wherein a volume of the second-metal layer (2) is less than a volume of the first-metal post (1), and a ratio of the volume of the second-metal layer (2) to the volume of the first-metal post (1) ranges from 0.1 to 0.65.

3. The conductive structure (10) according to claim 1, **characterized in that** a bonding area between the second-metal layer (2) and the first-metal post (1) is greater than or equal to 20 mm², optionally, the bonding area is greater than or equal to 80 mm²; or
wherein an average thickness of the second-metal layer (2) is less than or equal to 3 mm, optionally, the average thickness of the second-metal layer (2) ranges from 0.2 mm to 1.5 mm.

4. The conductive structure (10) according to claim 1, **characterized in that** on an appearance surface of the conductive structure (10), a ratio of a surface area of the second-metal layer (2) to a surface area of the first-metal post (1) is greater than or equal to 0.25;
optionally, a diameter of the conductive structure (10) is less than or equal to 10 mm, and the ratio of the surface area of the second-metal layer (2) to the surface area of the first-metal post (1) ranges from 0.25 to 0.6; or a diameter of the conductive structure (10) is greater than 10 mm and less than or equal to 30 mm, and the ratio of the surface area of the second-metal layer (2) to the surface area of the first-metal post (1) ranges from 0.75 to 2.

5. The conductive structure (10) according to any one of claims 1 to 4, **characterized in that** the second-metal layer (2) comprises a first section (21) and a second section (22), the first section (21) corresponds to an end surface of the first end (11), and the second section (22) corresponds to a side surface of the first end (11).

6. The conductive structure (10) according to claim 5, **characterized in that** the first-metal post (1) is radially protruded to form a boss (13), and the second-metal layer (2) extends at least onto the boss (13).

7. The conductive structure (10) according to claim 6, **characterized in that** the boss (13) is located at the first end (11), and the second section (22) covers at least a side surface of the boss (13) and a surface of the boss (13) on a side close to the second end (12);
optionally, the conductive structure (10) is a pole (101) and a current collector (120) integrally provided, the boss (13) is the current collector (120), and the current collector (120) is configured to be directly connected to the tab (1210).

8. The conductive structure (10) according to claim 6, **characterized in that** the boss (13) is away from the first end (11) relative to the second end (12), a radial dimension of the boss (13) is greater than a radial dimension of the first end (11), the second-metal layer (2) further comprises a third section (23), the third section (23) corresponds to a surface of the boss (13) on a side close to the first end (11), and the second section (22) is connected to the first section (21) and the third section (23).

9. The conductive structure (10) according to claim 8, **characterized in that** the third section (23) is formed as the end portion (20) of the second-metal layer (2), and the third section (23) is embedded in the boss (13); or
wherein the boss (13) is located at the second end (12), the boss (13) is partially exposed outside the second-metal layer (2), the conductive structure (10) is a pole (101) and a terminal pressing block (102) integrally provided, and the boss (13) is the terminal pressing block (102).

10. The conductive structure (10) according to claim 8, **characterized in that** the boss (13) is located between the first end (11) and the second end (12), the radial dimension of the boss (13) is further greater than a radial dimension of the second end (12), the second-metal layer (2) further comprises a fourth section (24), the fourth section (24) corresponds to a side surface of the boss (13), and the fourth section (24) is connected to the third section (23);
optionally, the second-metal layer (2) further comprises a fifth section (25), the fifth section (25) corresponds to a side surface of the boss (13) away from the first end (11), and the fourth section (24) is connected to the fifth section (25) and the third section (23).

11. The conductive structure (10) according to claim 5, **characterized in that** the end surface of the first end (11) is partially recessed inward to form a groove (11b), the first section (21) comprises a first sub-section (211), a second sub-section (212), and a third sub-section (213) connected in sequence, the first sub-section (211) is located outside the groove (11b), the second sub-section (212) is located on a side wall of the groove (11b), and the third sub-section (213) is located on a bottom wall of the groove (11b).

12. The conductive structure (10) according to any one of claims 1 to 4, **characterized in that** the first-metal post (1) is an aluminum post, and the second-metal layer (2) is a copper layer; and/or wherein a bonding interface between the second-metal layer (2) and the first-metal post (1) has an uneven microstructure; and/or wherein a conductivity of a second metal in the second-metal layer (2) is greater a conductivity of a first metal in the first-metal post (1).

13. A cover plate assembly (100), **characterized in that** the cover plate assembly (100) comprises:
a cover plate (110); and
the conductive structure (10) according to any one of claims 1 to 12, wherein the conductive structure (10) passes through the cover plate (110).

14. The cover plate assembly (100) according to claim 22, **characterized in that** the conductive structure (10) is a pole (101), the cover plate assembly (100) further comprises a current collector (120), and the current collector (120) is located on one side of the cover plate (110) and directly connected to the conductive structure (10); or wherein the conductive structure (10) is a pole (101) and a terminal pressing block (102) integrally provided, the cover plate assembly (100) further comprises a current collector (120), the current collector (120) is located on one side of the cover plate (110) and directly connected to the conductive structure (10), and the terminal pressing block (102) presses against another side of the cover plate (110);
optionally, the cover plate (110) comprises:
a cover plate body (111),
a first insulating member (112) disposed between the conductive structure (10) and the cover plate body (111);
a second insulating member (113) disposed between the cover plate body (111) and the current collector (120); and/or
a sealing member (130) disposed between the cover plate (110) and the conductive structure (10).

15. A battery cell (1000), **characterized in that** the battery cell (1000) comprises:
a casing (1100) comprising an accommodating cavity (1110);
an electrode assembly (1200) disposed in the accommodating cavity (1110), where the electrode assembly (1200) comprises a tab (1210); and
the cover plate assembly (100) according to any one of claims 13 to 14, wherein the cover plate assembly (100) is connected to the casing (1100) and closes an opening of the accommodating cavity (1110), and the conductive structure (10) is connected to the tab (1210).
